# DEMANDE DE BREVET EUROPEEN

(11) **EP 4 371 420 A1**
(43) Date de publication de la demande: **22.05.2024**
(21) Numéro de dépôt: 23206298.4
(22) Date de dépôt: 27.10.2023
(51) Int. Cl.: A23P 30/10, A22C 7/00, A47J 43/20

(54) **MOULE DE FABRICATION D'UN PRODUIT ALIMENTAIRE COMPRENANT NOTAMMENT DEUX PARTIES DE MOULE ET UNE FEUILLE DÉFORMABLE**

(30) Priorité: 16.11.2022 FR 2211923
(71) Demandeur: System B, 53810 Change (FR)
(72) Inventeur: BEUCHER, Jérémy, 53960 BONCHAMP (FR); DUMAS, Xavier, 35410 CHATEAUGIRON (FR)
(74) Mandataire: Vidon Brevets & Stratégie

(57) **Abrégé**

La divulgation concerne un moule (1) de fabrication d'un produit alimentaire comprenant une première partie (10a) et une deuxième partie (10b) mobile l'une par rapport à l'autre au moins entre une position fermée et une position ouverte, lesdites première (10a) et deuxième (10b) parties comprenant chacune une cavité interne (101a, 101b) de réception d'une portion de matière (9) de produit alimentaire à conformer, lesdites cavités internes (101a, 101b) présentant des formes complémentaires, un bord dudit moule (1) comprenant une ouverture (11) débouchant dans lesdites cavités internes (101a, 101b) et ledit moule (1) comprend en outre une feuille déformable (12) reliant lesdites première (10a) et deuxième (10b) parties dudit moule (1) et étant configurée pour accueillir et entourer ladite portion de matière (9).

## Description

### Domaine de la divulgation

Le domaine de la divulgation est celui de l'agroalimentaire, et notamment les produits alimentaires commercialisés en boucherie ou en grandes et moyennes surfaces de distribution. Plus particulièrement, la divulgation concerne les dispositifs d'aide à la fabrication de produits alimentaires, se présentant par exemple, mais non exclusivement, sous la forme d'un mélange comprenant une préparation d'une ou plusieurs viandes et/ou ingrédients, tel que du fromage, du jambon, du bacon, des légumes ou autre.

Généralement, ces produits alimentaires sont commercialisés crus de sorte que le client puisse faire cuire lui-même le produit alimentaire, par exemple au four, à la poêle ou au barbecue.

### Art antérieur

Il est connu, pour fabriquer de tels produits alimentaires, d'assembler à la main les différents ingrédients du mélange et de façonner/conformer, à la main encore une fois, cet assemblage selon une forme sensiblement en demi-lune, par exemple, lorsqu'il s'agit de fabriquer un produit de type cordon bleu.

Toutefois, un inconvénient de cette technique réside dans le fait que le mélange, l'assemblage des différents aliments puis le façonnage du produit sont relativement chronophages, notamment lorsque l'on souhaite donner une forme esthétique au produit fini, comme celle d'une demi-lune pour un cordon bleu par exemple. Ce critère esthétique ne peut être ignoré afin de faciliter la vente de tels produits par le professionnel qui les prépare.

Un autre inconvénient de cette technique réside dans le fait que les portions d'aliments à assembler ne sont pas toujours identiques. Ainsi, il existe un risque pour la forme et les dimensions du produit alimentaire ne soient pas régulières d'un produit à l'autre, ce qui peut avoir un impact négatif sur les ventes du produit alimentaire.

Encore un autre inconvénient réside dans le fait qu'il est généralement nécessaire d'utiliser de la ficelle, du film plastique ou bien du film de cuisson pour tenter de donner au produit alimentaire une forme définie. Or, l'utilisation des tels éléments est relativement complexe et chronophage et ne garantit pas un résultat optimal.

Il existe donc un besoin de fournir une solution de fabrication nouvelle d'un produit alimentaire qui soit simple et rapide à mettre en oeuvre et qui permette d'obtenir une forme régulière et esthétique du produit après fabrication.

### Résumé de la divulgation

L'invention a été conçue en conservant ces inconvénients de l'art antérieur à l'esprit. L'invention se rapporte plus particulièrement à un moule de fabrication d'un produit alimentaire. Selon l'invention, le moule comprend une première partie et une deuxième partie mobile l'une par rapport à l'autre au moins entre une position fermée et une position ouverte, lesdites première et deuxième parties comprenant chacune un évidement débouchant dans une cavité interne de réception d'une portion de matière de produit alimentaire à conformer, lesdites cavités internes présentant des formes complémentaires.

Lesdits évidements forment en position fermée une ouverture sur un bord latéral dudit moule comprend une ouverture débouchant dans lesdites cavités internes et permettent à l'excédent de ladite portion de matière disposée dans ledit moule de déborder desdites première et deuxième parties, ledit moule comprenant en outre une feuille déformable reliant lesdites première et deuxième parties dudit moule et étant configurée pour accueillir et retenir ladite portion de matière débordant dudit moule.

Ainsi, la divulgation propose une solution simple et efficace qui permet de faciliter la fabrication d'un produit alimentaire se présentant par exemple sous la forme d'un cordon bleu. Un moule en deux parties reliées ensemble par une feuille déformable accueillant la portion de matière du produit alimentaire à conformer combinée à des évidements formant une ouverture ménagée sur un bord du moule permet au moule de s'adapter au grammage du produit alimentaire à fabriquer, en ce sens que l'excédent de matière peut déborder/s'étendre à travers l'ouverture.

En particulier, les parties du moule sont destinées à entrer en contact de façon à obtenir un produit alimentaire de forme définie et ayant des bordures nettes, tandis que la feuille déformable permet avantageusement de retenir l'excédent de matière alimentaire débordant de l'ouverture.

De plus, le fait que la feuille déformable soit reliée aux deux parties du moule évite de devoir la remplacer et la repositionner à chaque nouvelle opération de moulage de produit alimentaire.

Ainsi, une telle solution rend la préparation de ce type de produit plus simple.

Un tel moule permet une répétabilité dans la fabrication de ce type de produit de sorte à obtenir des produits homogènes/identiques, et évite des étapes supplémentaires de découpe de l'excédent de matière du produit alimentaire formé.

La structure du moule est en outre simplifiée puisqu'elle est constituée d'un seul et unique élément constitué de plusieurs parties reliées entre elles, à savoir une feuille déformable solidaire des deux parties du moule et reliant ces dernières entre elles.

Ceci facilité son utilisation et sa prise en mains.

Selon un aspect particulier, ladite feuille déformable est fabriquée en silicone.

Le silicone est un matériau déformable capable de reprendre sa forme initiale, même après un nombre très élevé de cycles d'utilisation. Un tel matériau est donc particulièrement adapté aux contraintes du moule selon la divulgation. De plus, c'est un matériau étanche qui est compatible avec une utilisation dans le secteur alimentaire. Un tel matériau permet également de faciliter le nettoyage du moule.

Selon un autre aspect particulier, ladite feuille déformable présente une épaisseur comprise entre 0,1mm et 5mm.

Une telle épaisseur assure une parfaite étanchéité de la feuille en silicone tout en permettant une déformation adaptée de cette dernière.

Selon un aspect particulier, ladite cavité interne de ladite première partie de moule comprend, sur au moins une partie de sa périphérie, une rainure ou un rebord faisant saillie, et en ce que ladite cavité interne de ladite deuxième partie de moule comprend de manière correspondante, sur au moins une partie de sa périphérie, une rainure ou un rebord faisant saillie configurée pour coopérer avec ladite rainure ou ledit rebord de ladite première partie de moule.

Ainsi, une telle structure permet d'assurer une étanchéité optimale de la feuille déformable lorsque le moule est fermé. Cela évite donc qu'un excédent de matière s'échappe de la cavité du moule par un autre endroit que l'ouverture prévue à cet effet. Ce rebord et cette rainure permettent également d'aider le centrage des première et deuxième parties du moule entres-elles.

Selon un autre aspect particulier, le moule comprend un jeu d'assemblage entre ladite rainure et ledit rebord dans la position fermée dudit moule, ledit jeu d'assemblage étant inférieur à deux fois l'épaisseur de ladite feuille déformable.

Un tel jeu d'assemblage, dont les dimensions sont inférieures à l'épaisseur de la feuille déformable repliée sur elle-même permet de comprimer la feuille déformable entre le rebord et la rainure de sorte à participer à l'étanchéité du moule. De cette manière, la matière alimentaire disposée dans le moule ne peut s'échapper/s'évacuer hors du moule. L'excédent de matière alimentaire ne peut déborder que dans la poche formée par la feuille déformable s'étendant à travers l'ouverture du moule prévue à cet effet.

Selon un autre aspect particulier, ladite rainure et ledit rebord faisant saillie présentent une section correspondante se présentant sous la forme d'un trapèze.

Une telle forme permet d'assurer une étanchéité optimale du moule. Cette forme permet également de ne pas imposer des contraintes mécaniques trop importantes sur la feuille déformable de sorte à ne pas diminuer sa durée de vie.

Selon un autre aspect particulier, le moule comprend des moyens de solidarisation des première et deuxième parties dudit moule.

Selon un autre aspect particulier, lesdits moyens de solidarisation comprennent deux pions portés par l'une desdites première et deuxième parties et deux lumières oblongues correspondantes ménagées dans l'autre desdites première et deuxième parties.

Ces moyens de solidarisation constituent une solution simple de solidarisation des première et deuxième parties du moule. La mise en oeuvre de pions et de lumières oblongues permet en outre d'obtenir une liaison pivot glissant, ou pivot simple, entre les première et deuxième parties du moule. Grâce à cette liaison pivot glissant/pivot, les parties du moule forment ensemble un bras de levier permettant d'exercer une pression optimale sur le moule de sorte à comprimer la portion et ainsi conformer le produit alimentaire.

Selon un aspect particulier, le moule comprend des moyens de solidarisation réversible de la feuille déformable sur lesdites première et deuxième parties dudit moule.

Une telle solution permet un nettoyage et un entretien aisés du moule. Cela facilite également le changement de la feuille dans le cas d'un déchirement ou d'une usure de cette dernière.

La divulgation concerne également un ensemble de fabrication d'un produit alimentaire comprenant au moins deux moules tel que décrit précédemment, lesdits au moins deux moules étant agencés de manière juxtaposée.

Un tel ensemble permet la préparation de plusieurs produits alimentaires simultanément de sorte à obtenir un gain de temps pour l'utilisateur.

La divulgation concerne en outre un procédé de fabrication d'un ou plusieurs produits alimentaires mettant en oeuvre un moule de fabrication ou un ensemble tel que décrit précédemment, ledit procédé comprenant, pour chaque moule :
- la fourniture et la disposition d'une portion de matière du produit alimentaire à conformer sur ladite feuille déformable dudit moule en position ouverte, au niveau de l'une desdites première et deuxième parties dudit moule ;
- le déplacement de l'autre desdites première et deuxième parties dudit moule de sorte à obtenir le passage du moule de ladite position ouverte vers une position de solidarisation dans laquelle ladite feuille déformable entoure ladite portion de matière et lesdits moyens de solidarisation desdites première et deuxième parties dudit moule coopèrent ensemble ;
- l'application d'une force/pression sur au moins l'une desdites première et deuxième parties dudit moule pour rapprocher lesdites première et deuxième parties l'une vers l'autre jusqu'à atteindre une position fermée dudit moule dans laquelle lesdites première et deuxième parties dudit moule sont entièrement rapprochées de sorte à comprimer ladite portion et conformer le produit alimentaire au sein desdites cavités internes dudit moule ;
- le démoulage dudit produit alimentaire par l'ouverture dudit moule et le retrait du produit alimentaire fini.

### Liste des Figures

La divulgation, ainsi que les différents avantages qu'elle présente, seront plus facilement compris, à la lumière de la description qui va suivre d'un mode de réalisation illustratif et non limitatif de celle-ci, et des dessins annexés parmi lesquels :
- [Fig 1] est une vue en perspective d'un moule de fabrication d'un produit alimentaire selon la divulgation, dans une première position ouverte ;
- [Fig 2] est une vue en perspective du moule de la figure 1 en cours de fermeture ;
- [Fig 3] est une vue en perspective du moule de la figure 1 en cours de fermeture ;
- [Fig 4] est une vue en coupe du moule de la figure 1 en position solidarisée ;
- [Fig 5] est une vue en perspective du moule de la figure 1 en position fermée ;
- [Fig 6] est une vue en coupe du moule de la figure 5 ;
- [Fig 7] est une vue en perspective d'un ensemble comprenant deux moules conformes à la divulgation ;
- [Fig 8] est une vue schématique du procédé de fabrication d'un produit alimentaire conforme à la divulgation en utilisant au moins un moule selon la divulgation.

### Description détaillée

Le principe général de l'invention repose sur la mise en oeuvre d'un moule comprenant deux parties, ou demi-coques, entre lesquelles est disposée une feuille déformable destinée à accueillir une portion de matière du produit alimentaire à conformer/façonner. La fermeture du moule et l'application d'une pression sur ce dernier permet de donner une forme souhaitée au produit alimentaire fabriqué.

Dans un exemple de réalisation, les deux demi-coques du moule comprennent une cavité interne en forme de demi-lune de sorte à fabriquer un produit alimentaire du type cordon bleu. D'autres types de cavités peuvent bien entendu être prévues de sorte à conformer des produits alimentaires ayant d'autres formes.

De préférence, le moule présente une ouverture latérale qui permet à un excédent de matière alimentaire de déborder des première et deuxième parties 10a, 10b du moule tout en étant maintenu par la feuille déformable, permettant ainsi au produit alimentaire de présenter une forme régulière malgré les variations de quantité de matière alimentaire disposée dans le moule. En d'autres termes, l'excédent de matière alimentaire peut s'étendre en dehors du moule mais tout en étant contenu dans la feuille déformable.

De préférence, le moule présente également des moyens de solidarisation des demi-coques entres elles pour permettre une fabrication aisée du produit alimentaire, limitant ainsi le risque d'ouverture non souhaitée du moule pendant la fabrication du produit alimentaire.

La technique décrite se rapporte également à un ensemble comprenant au moins deux moules pouvant être agencés de manière juxtaposée les uns par rapport aux autres, comme détaillé dans la suite de cette description.

La solution de la présente divulgation permet donc de faciliter et d'optimiser la fabrication de produits alimentaires. En effet, grâce à la mise en oeuvre des demi-coques et de la feuille déformable, l'assemblage et le façonnage du produit sont simplifiés, tout comme le démoulage du produit dit « fini » qui est également facilité. La fabrication du produit alimentaire est donc rendue plus simple et plus rapide, tout en garantissant une homogénéité de forme.

Ainsi, la mise en oeuvre du moule permet également d'obtenir un produit alimentaire dont la forme est régulière et donc plus esthétique.

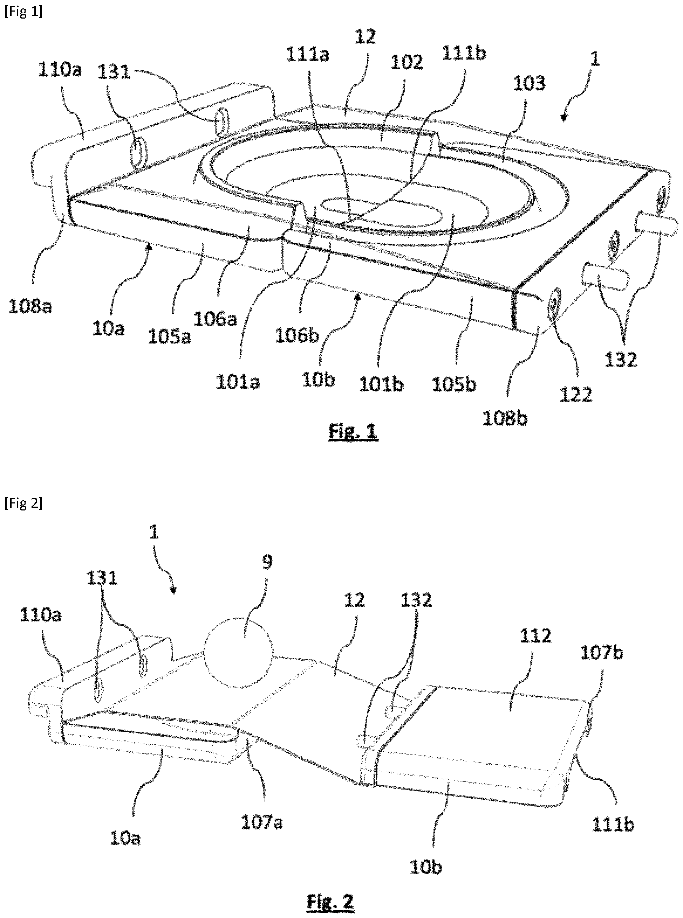

Plus précisément, la **figure 1** illustre un moule 1 conforme à la divulgation pour la fabrication d'un produit alimentaire, le produit alimentaire se présentant dans cet exemple sous la forme d'un cordon bleu.

Dans cet exemple de réalisation, le moule 1 comprend une première partie de moule, ou première demi-coque, 10a qui constitue la partie mâle du moule, et une deuxième partie, ou une deuxième demi-coque, 10b qui constitue la partie femelle du moule. Les première 10a et deuxième 10b parties du moule 1 sont solidarisées l'une par rapport à l'autre à l'aide d'une feuille déformable 12 qui sera décrite plus en détails par la suite.

La première partie 10a comprend une base 105a de forme sensiblement parallélépipédique. La base 105a comprend une surface inférieure (non visible) sensiblement plane qui sert de surface d'appui sur laquelle le moule 1 peut reposer. La base 105a comprend également une surface supérieure 106a présentant une cavité interne 101a. Dans cet exemple, la cavité interne 101a présente une forme de demi-lune de sorte à fabriquer un produit alimentaire du type cordon bleu. On comprend néanmoins que la cavité interne 101a peut prendre tout autre forme sans pour autant s'écarter du principe général de l'invention. Par exemple, la cavité interne 101a pourrait se présenter sous la forme d'un cercle, d'un rectangle, d'un carré, d'un sapin de noël, d'un animal, d'un légume, d'un personnage de film ou de dessin animé, etc.

La cavité interne 101a est délimitée par un rebord 102 faisant saillie par rapport à la surface supérieure 106a de la première partie 10a du moule. Dans cet exemple, le rebord 102 présente une section trapézoïdale.

Une première surface latérale 107a de la première partie 10a du moule 1 comprend un évidement 111a débouchant dans la cavité 101a.

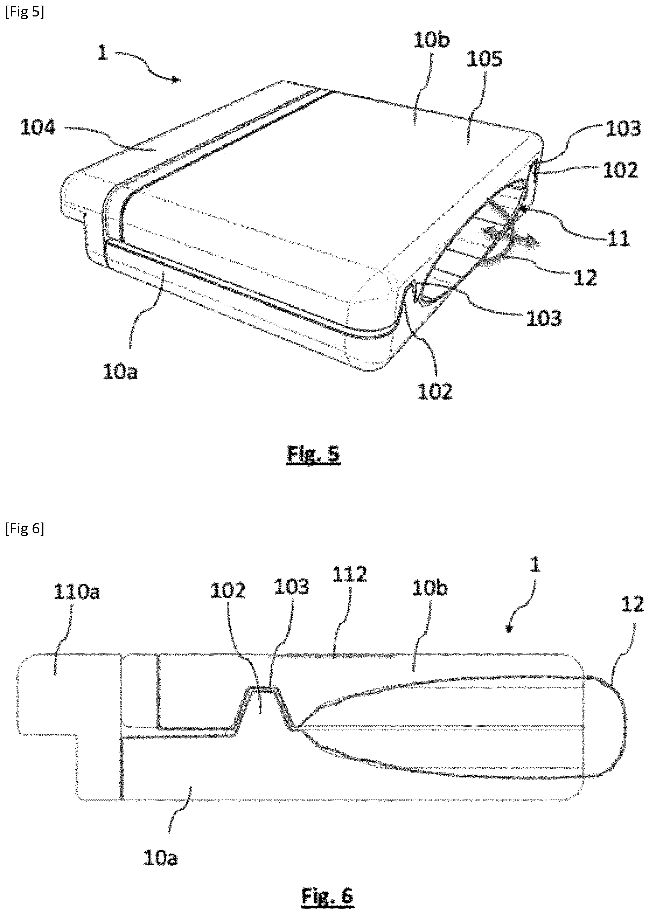

Une bride 108a est fixée, dans cet exemple, sur une dexième surface latérale (non visible) de la base 105a opposé à la première surface latérale 107a présentant l'évidement 111a. Cette bride 108a présente sensiblement une forme en L inversé dont la partie verticale est fixée à la première surface latérale 107a de la base 105a par des moyens de solidarisation 122 de la feuille déformable 12 au moule 1. Plus précisément, la feuille déformable 12 est fixée sur la première partie 10a du moule 1 par pincement/coincement de la feuille déformable 12 entre la base 105a et la bride 108a (comme illustré sur la figure 6). Les moyens de solidarisation 122 se présentent dans cet exemple sous la forme de vis de fixation qui permettent d'immobiliser la base 105a et la bride 108a ensemble.

La partie horizontale de la bride 108a en forme de L inversé constitue une poignée 110a de maintien du moule 1.

La deuxième partie 10b du moule 1 comprend une base 105b de forme sensiblement correspondante à celle de la première partie 10a du moule. La base 105b comprend une surface inférieure 112 (visible sur la figure 2 notamment) globalement plane qui sert de surface d'appuie sur laquelle l'utilisateur peut exercer une pression lorsque les deux parties 10a, 10b du moule 1 sont assemblées de sorte à façonner le produit alimentaire.

La deuxième partie 10b du moule 1 comprend également une surface supérieure 106b présentant une cavité interne 101b de forme correspondante à la cavité interne 101a de la première partie 10a du moule 1.

La cavité interne 101b de la deuxième partie 10b est délimitée par une rainure 103 creusée par rapport à la surface supérieure 106b de la première partie 10b du moule 1. La rainure 103 présente une forme complémentaire/correspondante au rebord 102 de la première partie 10a du moule 1 de sorte à recevoir le rebord 102 lorsque le moule 1 est fermé. Ainsi, le rebord 102 et la rainure 103 coopèrent ensemble pour assurer un guidage et un positionnement optimaux des première 10a et deuxième 10b parties entres-elles lorsque le moule 1 se ferme.

Comme détaillé par la suite, le rebord 102 et la rainure 103 participent également à la bonne étanchéité de la feuille déformable 12 de sorte que la matière alimentaire disposée sur la feuille déformable 12 ne s'échappe et ne déborde pas de manière non souhaitée du moule 1.

On comprend bien évidemment que d'autres formes de rebord 102 et de rainure 103 peuvent être envisagées sans pour autant s'écarter du principe général de l'invention, tant que ces éléments permettent toujours de participer au guidage et au positionnement des parties 10a, 10b du moule 1 et à l'étanchéité de la feuille déformable 12.

On comprend également qu'il est possible d'inverser le positionnement du rebord 102 et de la rainure 103. En d'autres termes, le rebord 102 peut être porté par la deuxième partie 10b du moule 1 tandis que la rainure 103 peut être ménagée dans la première partie 10a du moule 1.

De manière identique à la première partie 10a du moule, une première surface latérale 107b de la deuxième partie 10b du moule 1 comprend un évidement 111b débouchant dans la cavité 101b. Ainsi, lorsque le moule 1 est fermé (comme illustré sur la figure 5), les évidements 111a et 111b des première 10a et deuxième 10b parties du moule 1 forment une ouverture 11 sur un bord latéral du moule 1 permettant à un excédent de matière alimentaire disposé dans le moule 1 de déborder des première et deuxième parties 10a, 10b du moule 1 (tout en étant retenu par la feuille déformable, comme décrit dans la suite de cette description).

Selon un mode de réalisation, l'évidement 111b peut également servir de poignée pour faciliter l'ouverture du moule 1 ou bien l'application d'une force de pression sur le moule 1 (par exemple sur la partie 10b du moule 1) par l'utilisateur.

Une bride 108b est fixée, dans cet exemple, sur une deuxième surface latérale (non visible) de la base 105b opposé à la première surface latérale 107b présentant l'évidement 111b. Cette bride 108b s'étend dans le prolongement de la base 105b et est fixée à la deuxième surface latérale de la base 105b par des moyens de solidarisation 122 de la feuille déformable 12 au moule 1. Comme précédemment, la feuille déformable 12 est fixée sur la deuxième partie 10b du moule 1 par pincement/coincement de la feuille déformable 12 entre la base 105b et la bride 108b. De nouveau, les moyens de solidarisation 122 se présentent, dans cet exemple, sous la forme de vis de fixation qui permettent d'immobiliser la base 105b et la bride 108b ensemble.

Les moyens de solidarisation 122 sont réversibles de sorte à pouvoir démonter les deux parties 10a, 10b du moule 1 et libérer la feuille déformable 12. Ainsi, il est possible de faciliter le nettoyage du moule 1 et de la feuille 12. Cela permet en outre de remplacer la feuille déformable lorsque celle-ci présente une usure anormale ou trop importante.

Les brides 108a et 108b permettent de pincer la feuille déformable 12 entre deux surfaces planes de plus grandes dimensions. Ainsi, on obtient un maintien optimal de la feuille déformable 12, évitant ainsi que cette dernière ne se détache des première 10a et deuxième 10b parties du moule 1 lors de l'utilisation. Cela permet également de limiter les risques de déchirure de la feuille déformable 12 lors de la manipulation ou du nettoyage du moule 1.

Les brides 108a et 108b portent des moyens de solidarisation 13 des première 10a et deuxième 10b parties du moule 1 ensemble.

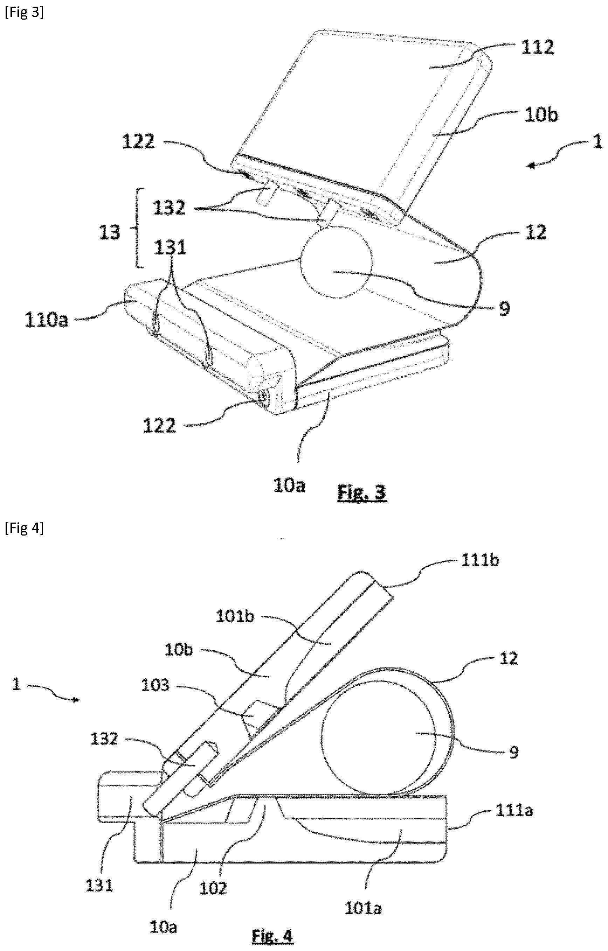

Dans cet exemple, la bride 108a de la première partie 10a du moule 1 comprend deux lumières oblongues 131 s'étendant perpendiculairement à la surface supérieure 106a, tandis que la bride 108b de la deuxième partie 10b du moule 1 comprend des pions de solidarisation 132 faisant saillie par rapport à la surface latérale libre de la bride 108b. Les pions de solidarisation 132 sont configurés pour s'insérer dans, ou coopérer avec, les lumières oblongues 131 lors de la solidarisation des parties 10a,10b du moule 1 ensemble, comme illustré sur la figure 4.

La mise en oeuvre de lumières oblongues 131 permet de faciliter l'insertion des pions 132 dans les lumières 131. Cette forme particulière permet en outre de fournir un degré de liberté en rotation de la deuxième partie 10b par rapport à la première partie 10a du moule afin d'obtenir un bras de levier lorsque les deux parties 10a, 10b du moule 1 sont solidarisées. Ainsi, il est plus aisé pour l'utilisateur d'exercer une force de pression sur la deuxième partie 10b du moule 1 (tout en maintenant la première partie 10a du moule 1 par la poignée 110a) pour façonner le produit alimentaire.

On comprend également qu'il est possible d'inverser le positionnement des lumières oblongues 131 et des pions 132. En d'autres termes, les lumières 131 peuvent être ménagées dans la bride 108b de la deuxième partie 10b du moule 1 tandis que les pions 132 peuvent être porté par la bride 108a de la première partie 10a du moule 1.

On comprend aussi que d'autres moyens de solidarisation des parties 10a, 10b du moule 1 peuvent être envisagés sans pour autant s'écarter du principe général de l'invention. Par exemple, on pourrait envisager de substituer les lumières oblongues par un ou plusieurs axes de rotation et les pions par des crochets qui viendraient coopérer avec le ou les axes de rotation.

Comme indiqué précédemment, le moule 1 de la divulgation comprend une feuille déformable 12 reliant les deux parties 10a, 10b du moule 1. Cette feuille déformable 12 est disposée entre les deux parties 10a, 10b du moule 1 lorsque le moule 1 est fermé. Plus précisément, et comme illustré sur les **figures 4** et **5****,** la feuille déformable 12 est repliée sur elle-même dans la position fermée du moule 1 et est intercalée entre les deux parties 10a, 10b du moule 1.

Comme illustré sur la **figure 2****,** la feuille déformable 12 est destinée à accueillir/recevoir la portion 9 de matière alimentaire qui est destinée à être façonnée pour former le produit alimentaire dit « fini ». Ainsi, lorsque le moule 1 est fermé, la feuille déformable 12 contient de manière étanche la portion 9 de matière alimentaire pour que lorsque le moule 1 est fermé et qu'une pression est exercée par l'utilisateur sur le moule 1, la portion 9 de matière soit comprimée dans le moule pour l'étaler/la distribuer au sein des cavités internes 101a, 101b pour que la portion 9 soit façonnée à la forme souhaitée.

Le fait que la feuille 12 soit déformable permet de générer une contre pression sur la portion 9 lors de la fermeture du moule 1. Cette contre pression permet de compenser les éventuelles variations de volume/quantité de la portion 9 matière à l'intérieur du moule tout en compressant tout de même la portion 9 de matière à façonner. De cette manière, il est possible de fabriquer des produits alimentaires ayant sensiblement toujours la même forme. En d'autres termes, cela permet d'éviter à l'utilisateur de devoir précisément doser en poids ou en volume la portion 9 à façonner. Par exemple, un moule 1 selon la divulgation peut être utilisé de manière identique avec des portions allant de 80g à 200g.

De préférence, la feuille déformable 12 est fabriquée en silicone. En effet, cette matière est étanche et permet donc de contenir de manière sûre la portion 9 au sein du moule 1. De plus, le silicone est un matériau compatible avec les contraintes du secteur alimentaire. Le silicone limite également l'adhérence des aliments de sorte à faciliter le démoulage du produit alimentaire fini et le nettoyage de la feuille déformable 12.

En outre, le silicone est un matériau déformable capable de reprendre sa forme initiale, même après un nombre très élevé de cycle d'utilisation, ce choix est donc particulièrement adapté aux contraintes du moule 1 selon la divulgation.

Comme indiqué précédemment et illustré sur la **figure 6****,** la feuille déformable 12 est déformée et pincée/coincée entre le rebord 102 et la rainure 103 lorsque le moule 1 est fermé de sorte à garantir l'étanchéité des cavités internes 101a, 101b et éviter une évacuation non souhaitée de matière alimentaire hors du moule 1. Ce pincement de la feuille 12 permet donc de garantir une étanchéité sur l'ensemble de la périphérie/du pourtour des cavités internes 111a, 111b. De plus, la coopération du rebord 102 avec le rebord 103 créée une sorte de chicane assurant une étanchéité de la feuille déformable 12.

La feuille déformable 12 en silicone présente de préférence une épaisseur comprise entre 0,1 et 5mm, et de préférence entre 0,5mm et 3 mm de sorte à assurer une durée de vie suffisante à la feuille déformable 12 en dépit des contraintes mécaniques qu'elle subit. En d'autres termes, l'étanchéité et la capacité de la feuille déformable 12 à retrouver sa position initiale doivent être optimales sur un nombre de cycle très élevé.

D'autres matériaux, tel qu'un élastomère, un polymère ou du TPU, peuvent être envisagé pour fabriquer la feuille déformable 12, l'utilisation de ces matériaux dépendant de conditions de mise en oeuvre opérationnelles, et notamment du nombre d'utilisations souhaitées pour cette feuille déformable.

Le moule 1 présente un jeu d'assemblage entre le rebord 102 et la rainure 103 de sorte à permettre le pincement de la feuille déformable 12. Plus précisément, le jeu d'assemblage entre le rebord 102 et la rainure 103 est inférieur à deux fois l'épaisseur de la feuille déformable 12. De cette manière, la feuille déformable 12 est pincée/coincée entre le rebord 102 et la rainure 103. En outre, du fait des dimensions du jeu d'assemblage entre le rebord 102 et la rainure 103, la feuille déformable 12 est comprimée (c'est-à-dire que son épaisseur est réduite) au niveau du rebord 102 et de la rainure 103. Cette compression de la feuille déformable 12 participe à garantir une étanchéité optimale du moule 1 en position fermée.

Lors de l'ouverture du moule 1, la feuille déformable 12 est capable de reprendre sa position et son épaisseur initiales.

Comme indiqué précédemment, le moule 1 présente une ouverture 11 qui, combinée à la mise en oeuvre de la feuille déformable 12, permet à un excédent de matière alimentaire de déborder dans une sorte de poche formée par la feuille déformable 12 s'étendant à travers l'ouverture 11 lorsqu'une pression est exercée sur le moule 1 en position fermé. Ainsi, le moule 1 selon la divulgation permet de s'adapter au grammage du produit alimentaire à fabriquer, puisque que l'excédent de matière peut déborder/s'étendre à travers l'ouverture 11 et ce sans que le produit alimentaire fini ne présente une forme ou une dimension irrégulière d'un produit à l'autre.

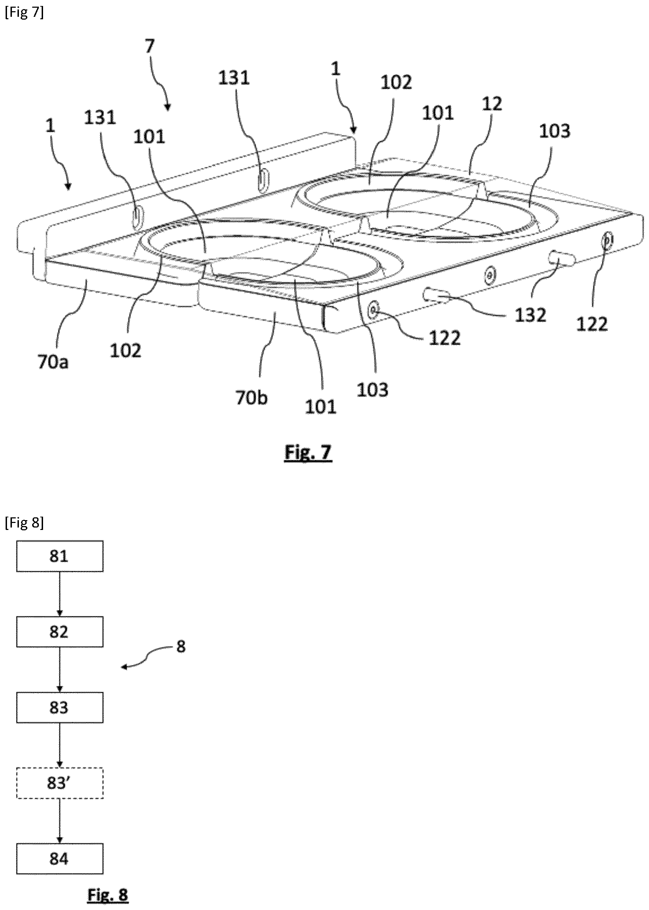

Selon un autre mode de réalisation, illustré sur la **figure 7****,** la divulgation concerne également un ensemble 7 de fabrication de plusieurs produits alimentaires. Plus précisément, l'ensemble comprend au moins deux moules 1 agencés de manière juxtaposée, et de préférence en ligne les uns à côté des autres. Dans cet exemple, seuls deux moules 1 sont illustrés. On comprend toutefois qu'il est possible juxtaposer une pluralité de moules 1 les uns à côtés des autres.

Dans l'exemple illustré, l'ensemble 7 comprend deux demi-coques 70a, 70b formant respectivement les première et deuxième parties du moule. Dans cet exemple, les demi-coques sont monobloc, en ce sens que chaque demi-coque comprend une pluralité de cavités internes. Un tel ensemble permet donc la préparation de plusieurs produits alimentaires simultanément de sorte à obtenir un gain de temps conséquent pour l'utilisateur.

Dans une variante non illustrée, il peut être envisagé de simplement solidariser plusieurs moules 1 tels que décrit précédemment. Dans ce cas, des moyens de solidarisation et de préhension (non illustrés) peuvent être prévus afin de manipuler l'ensemble des moules de manière simultanée.

La divulgation concerne également un procédé 8 de fabrication d'un ou plusieurs produits alimentaires, se présentant par exemple sous la forme d'un cordon bleu. Un tel procédé, illustré sur la **figure 8** et décrit en relation avec les **figures 2** à **6****,** met en oeuvre un moule 1 de fabrication tel que décrit précédemment ou un ensemble 7 décrit précédemment.

Le procédé 8 comprend tout d'abord, pour chaque moule 1, la fourniture et la dépose 81 d'une portion 9 de matière du produit alimentaire à conformer sur la feuille déformable 12 du moule 1 (comme illustré sur la figure 2), au niveau de l'une ou l'autre des parties 10a, 10b du moule 1. Le moule 1 se trouve alors en position ouverte, en ce sens que les deux parties 10a, 10b du moule 1 ne sont pas solidarisées au niveau des moyens de solidarisation 13. Dans cette position, la feuille déformable 12 est ouverte (sensiblement plane), c'est-à-dire qu'elle n'est pas repliée sur elle-même pour entourer la portion 9 de matière alimentaire. Dans l'exemple illustré sur la figure 2, la portion 9 de matière est déposée sur la feuille déformable, au niveau de la première partie 10a du moule 1.

Il est ensuite nécessaire de déplacer (étape 82) l'une des première 10a ou deuxième 10b parties du moule 1 (de préférence la partie du moule libre, c'est-à-dire la partie du moule sur laquelle n'est pas posée la portion 9, et plus particulièrement la deuxième partie 10b dans l'exemple illustré sur les figures 3 et 4) de la position ouverte (illustrée sur les figures 1 et 2 par exemple) vers une position de solidarisation (illustrée sur la figure 4) dans laquelle ladite feuille déformable 12 entoure/recouvre la portion 9 de matière et les moyens de solidarisation 13 des première et deuxième parties du moule coopèrent ensemble.

Ce déplacement des première et deuxième parties 10a, 10b du moule se refermant l'une sur l'autre permet à la feuille déformable 12 d'englober/entourer la portion 9 de matière. Pour ce faire, il est nécessaire de soulever la partie du moule sur laquelle la portion 9 ne repose pas (ici la deuxième partie 10b du moule 1), de la faire pivoter d'environ 45° et de la déplacer jusqu'à ce que les moyens de solidarisation 13 coopèrent. Cette opération est réalisée tandis que la portion 9 de matière reste maintenue par la feuille déformable 12.

De préférence, l'insertion des pions dans les lumières oblongues s'effectue avec un angle d'inclinaison maximal (correspondant à la figure 4) de la partie du moule qui est déplacée (la deuxième partie 10b dans cet exemple) par rapport à la partie du moule qui est fixe (la première partie 10a du moule dans cet exemple).

Une force/pression sur la partie mobile du moule (la deuxième partie 10b dans cet exemple) est ensuite appliquée (étape 83) pour obtenir une rotation des parties 10a, 10b du moule 1 l'une vers l'autre jusqu'à atteindre une position fermée du moule 1 dans laquelle les première et deuxième parties 10a, 10b du moule 1 sont entièrement rapprochées. L'application de cette force permet de comprimer la portion 9 de matière au sein du moule de sorte à façonner le produit alimentaire à la forme souhaitée.

Plus précisément, ce mouvement de rotation des parties 10a, 10b l'une vers l'autre permet, lors du contact avec la portion 9, de générer un effort qui a tendance à pousser la portion 9 vers la partie libre de la feuille déformable (c'est-à-dire vers le centre de la feuille déformable). À la fin de ce mouvement de rotation des parties 10a, 10b l'une vers l'autre, c'est-à-dire lorsque les première 10a et deuxième 10b parties sont entièrement rapprochées/collées, la compression est maximale et la portion 9 remplit toute la cavité du moule 1. Cette compression permet d'agglomérer entre eux les différents composants de la portion 9, ce qui n'est pas réalisable aisément et rapidement à la main. Il est donc possible de se passer de l'utilisation de ficelle ou de film pour maintenir la forme du produit alimentaire fini.

Lors de l'application de la force sur le moule 1 par l'utilisateur, la déformation de la feuille déformable 12 permet de compenser les variations raisonnables de volume de la portion 9 de matière alimentaire à l'intérieur de moule. Ainsi, le moule 1 garantit que le produit alimentaire présente la forme souhaitée.

Pour finir, le procédé 8 comprend une étape de démoulage 84 du produit alimentaire par l'ouverture du moule 1 et le retrait du produit alimentaire fini.

Optionnellement, le procédé 8 peut comprendre, préalablement au démoulage 84, le déplacement 83' du dispositif 1 ou de l'ensemble 7 vers une zone de stockage, comme un réfrigérateur ou une vitrine réfrigérée, par exemple.

Un tel procédé 8 permet, grâce au moule de la divulgation, de faciliter la fabrication de produits alimentaires. Le procédé permet également d'optimiser le temps de fabrication du produit alimentaire tout en permettant d'obtenir une forme régulière de ce dernier.

Le moule de la présente divulgation est décrit en relation avec la fabrication d'un produit alimentaire de type cordon bleu qui consiste en une préparation comprenant différentes couches d'aliments repliées sur elles-mêmes et présentant ou non une panure. Toutefois, on comprend bien évidemment que le moule peut être utilisé pour fabriquer d'autres produits alimentaires tel que des boules de chair ou de viande hachée (avec ou sans panure), par exemple.

Il est possible de prévoir plusieurs tailles de moule de sorte à permettre la fabrication de produits alimentaires de différentes dimensions ou volumes. Par exemple, il est possible de prévoir des moules destinés à la fabrication de produits alimentaires allant de 120g à 180g et d'autres moules destinés à la fabrication de produits alimentaires allant de 30g à 90g. Ces moules, de différentes tailles, partagent la même structure et les mêmes caractéristiques techniques que le moule décrit précédemment.

## Revendications

1. Moule (1) de fabrication d'un produit alimentaire, **caractérisé en ce qu'**il comprend une première partie (10a) et une deuxième partie (10b) mobile l'une par rapport à l'autre au moins entre une position fermée et une position ouverte,
lesdites première (10a) et deuxième (10b) parties comprenant chacune un évidement (111a, 111b) débouchant dans une cavité interne (101a, 101b) de réception d'une portion de matière (9) de produit alimentaire à conformer, lesdites cavités internes (101a, 101b) présentant des formes complémentaires,
lesdits évidements (111a, 111b) formant en position fermée une ouverture (11) sur un bord latéral dudit moule (1) débouchant dans lesdites cavités internes (101a, 101b) et permettant à l'excédent de ladite portion de matière (9) disposée dans ledit moule (1) de déborder desdites première (10a) et deuxième (10b) parties,
ledit moule (1) comprenant en outre une feuille déformable (12) reliant lesdites première (10a) et deuxième (10b) parties dudit moule (1) et étant configurée pour accueillir et retenir ladite portion de matière (9) débordant dudit moule (1).

2. Moule (1) de fabrication d'un produit alimentaire selon la revendication 1, **caractérisé en ce que** ladite feuille déformable (12) est fabriquée en silicone.

3. Moule (1) de fabrication d'un produit alimentaire selon la revendication 2, **caractérisé en ce que** ladite feuille déformable (12) présente une épaisseur comprise entre 0,1mm et 5mm.

4. Moule (1) de fabrication d'un produit alimentaire selon l'une des revendications 1 à 3, **caractérisé en ce que** ladite cavité interne (101a) de ladite première partie (10a) de moule comprend, sur au moins une partie de sa périphérie, une rainure (102) ou un rebord (103) faisant saillie, et **en ce que** ladite cavité interne (101b) de ladite deuxième partie (10b) de moule comprend de manière correspondante, sur au moins une partie de sa périphérie, une rainure (102) ou un rebord (103) faisant saillie configurée pour coopérer avec ladite rainure (102) ou ledit rebord (103) de ladite première partie (10a) de moule.

5. Moule (1) de fabrication d'un produit alimentaire selon la revendication 4, **caractérisé en ce qu'**il comprend un jeu d'assemblage entre ladite rainure (102) et ledit rebord (103) dans la position fermée dudit moule (1), ledit jeu d'assemblage étant inférieur à deux fois l'épaisseur de ladite feuille déformable (12).

6. Moule (1) de fabrication d'un produit alimentaire selon la revendication 4 ou 5, **caractérisé en ce que** ladite rainure (102) et ledit rebord (103) faisant saillie présentent une section correspondante se présentant sous la forme d'un trapèze.

7. Moule (1) de fabrication d'un produit alimentaire selon l'une des revendications 1 à 6, **caractérisé en ce qu'**il comprend des moyens de solidarisation (13) des première (10a) et deuxième (10b) parties dudit moule (1).

8. Moule (1) de fabrication d'un produit alimentaire selon la revendication 7, **caractérisé en ce que** lesdits moyens de solidarisation (13) comprennent deux pions (132) portés par l'une desdites première (10a) et deuxième (10b) parties et deux lumières oblongues (131) correspondantes ménagées dans l'autre desdites première (10a) et deuxième (10b) parties.

9. Ensemble (7) de fabrication d'un produit alimentaire, ledit ensemble comprenant au moins deux moules (1) selon l'une des revendications 1 à 8, lesdits au moins deux moules (1) étant agencés de manière juxtaposée.

10. Procédé (8) de fabrication d'un ou plusieurs produits alimentaires mettant en oeuvre un moule (1) de fabrication selon l'une des revendications 1 à 8 ou d'un ensemble (7) selon la revendication 9, ledit procédé (8) comprenant, pour chaque moule (1) :
- la fourniture et la disposition (81) d'une portion de matière (9) du produit alimentaire à conformer sur ladite feuille déformable (12) dudit moule (1) en position ouverte, au niveau de l'une desdites première (10a) et deuxième (10b) parties dudit moule (1) ;
- le déplacement (82) de l'autre desdites première (10a) et deuxième (10b) parties dudit moule (1) de sorte à obtenir le passage du moule (1) de ladite position ouverte vers une position de solidarisation dans laquelle ladite feuille déformable (12) entoure ladite portion de matière (9) et lesdits moyens de solidarisation (13) desdites première (10a) et deuxième (10b) parties dudit moule (1) coopèrent ensemble ;
- l'application (83) d'une force/pression sur au moins l'une desdites première (10a) et deuxième (10b) parties dudit moule (1) pour rapprocher lesdites première (10a) et deuxième (10b) parties l'une vers l'autre jusqu'à atteindre une position fermée dudit moule (1) dans laquelle lesdites première (10a) et deuxième (10b) parties dudit moule (1) sont entièrement rapprochées de sorte à comprimer ladite portion (9) et conformer le produit alimentaire au sein desdites cavités internes (111a, 111b) dudit moule (1) ;
- le démoulage (84) dudit produit alimentaire par l'ouverture dudit moule (1) et le retrait du produit alimentaire fini.
